# EUROPEAN PATENT APPLICATION

(11) **EP 4 283 712 A1**
(43) Date of publication of application: **29.11.2023**
(21) Application number: 22911948.2
(22) Date of filing: 21.12.2022
(51) Int. Cl.: H01M 4/136, H01M 4/62, H01M 4/02

(54) **CATHODE SLURRY COMPOSITION, AND LITHIUM SECONDARY BATTERY MANUFACTURED USING SAME**

(30) Priority: 24.12.2021 KR 20210187722; 20.12.2022 KR 20220179775
(71) Applicant: LG Energy Solution, Ltd., Seoul 07335 (KR)
(72) Inventor: KWON, O Jong, Daejeon 34122 (KR); KIM, Min Hyun, Daejeon 34122 (KR); JOE, Youn Cheol, Daejeon 34122 (KR); KIM, Ju Ryoun, Daejeon 34122 (KR); JO, Jeong Geun, Daejeon 34122 (KR); KIM, Ki Woong, Daejeon 34122 (KR); AN, In Gu, Daejeon 34122 (KR)
(74) Representative: Hoffmann Eitle
(86) International application number: PCT/KR2022/020996
(87) International publication number: WO 2023/121315

(57) **Abstract**

A positive electrode slurry composition includes a positive electrode active material, a dispersant, a conductive material, a binder, and a solvent, wherein the positive electrode active material includes lithium iron phosphate, and the dispersant has a weight-average molecular weight of 10,000 g/mol to 150,000 g/mol.

## Description

### [Technical Field]

The present application claims priority to Korean Patent Application No. 10-2021-0187722 filed on December 24, 2021, and Korean Patent Application No. 10-2022-0179775, filed on December 20, 2022, the disclosures of which are incorporated herein by reference.

The present disclosure relates to a positive electrode slurry composition and a lithium secondary battery manufactured using the same, and more specifically, to a positive electrode slurry composition including a low-molecular-weight dispersant and a lithium secondary battery manufactured using the same.

### [Background]

As the technology development and the demand for electric vehicles and energy storage systems (ESS) increase, the demand for batteries as an energy source is rapidly increasing, and accordingly, various studies on batteries capable of meeting various needs have been conducted. Particularly, studies on lithium secondary batteries which exhibit excellent lifetime and cycle characteristics while having a high energy density as a power source for the device are being actively conducted.

As a positive electrode active material of the lithium secondary battery, lithium cobalt-based oxides, lithium nickel cobalt manganese-based oxides, lithium iron phosphate, and the like have been used.

Among those listed above, lithium iron phosphate is inexpensive because it is abundant in resources and contains iron, which is a low-cost material. Also, since lithium iron phosphate has low toxicity, environmental pollution can be reduced when lithium iron phosphate is used. Furthermore, since lithium iron phosphate has an olivine structure, the active material structure can be stably maintained at a high temperature as compared to lithium transition metal oxides having a layered structure. Accordingly, the high-temperature stability and high-temperature lifetime characteristics of batteries can be excellent.

However, lithium iron phosphate has a problem of poor lithium mobility and low electrical conductivity compared to lithium transition metal oxides such as lithium nickel cobalt manganese oxides. Accordingly, conventionally, lithium iron phosphate having a small average particle diameter was used to shorten the movement route of lithium, the surface of lithium iron phosphate was coated with carbon to improve electrical conductivity, and an excessive amount of a conductive material was used.

However, as the particle size of lithium iron phosphate is reduced, the specific surface area of lithium iron phosphate increases, and lithium iron phosphate whose surface is coated with carbon exhibits degraded wettability with respect to a solvent. As a result, particle agglomeration of lithium iron phosphate severely occurs, and thus the stability and coating processability of a positive electrode slurry are degraded. Also, when an excessive amount of a conductive material is used, agglomeration between conductive material particles excessively occurs in a positive electrode slurry. As the amount of the agglomerated conductive material increases, the amount of lithium iron phosphate that is able to participate in a cell charging/discharging reaction relatively decreases, and as a result, the charge/discharge resistance of a lithium secondary battery may increase.

Therefore, a technology for suppressing particle agglomeration in a positive electrode slurry composition and positive electrode including lithium iron phosphate is required.

### [Technical Problem]

The present invention is directed to providing a positive electrode slurry composition having a relatively low viscosity and a relatively high solid content by improving the dispersibility of a positive electrode active material and/or a conductive material in a positive electrode slurry composition and suppressing particle agglomeration.

The present invention is also directed to providing a lithium secondary battery having decreased discharge resistance by improving the dispersibility of a positive electrode active material and/or a conductive material in a positive electrode and suppressing particle agglomeration.

### [Technical Solution]

According to one embodiment of the present invention, there is provided a positive electrode slurry composition which includes a positive electrode active material, a dispersant, a conductive material, a binder, and a solvent, wherein the positive electrode active material includes lithium iron phosphate, and the dispersant has a weight-average molecular weight of 10,000 g/mol to 150,000 g/mol.

According to another embodiment of the present invention, there is provided a lithium secondary battery which includes a positive electrode, wherein the positive electrode includes a positive electrode active material, a dispersant, a conductive material, and a binder, the positive electrode active material includes lithium iron phosphate, and the dispersant has a weight-average molecular weight of 10,000 g/mol to 150,000 g/mol.

### [Advantageous Effects]

Since a positive electrode slurry composition according to the present invention includes a dispersant having a low weight-average molecular weight, the solvent wettability and dispersibility of lithium iron phosphate particles included in the positive electrode slurry composition are improved, and thus particle agglomeration of lithium iron phosphate can be suppressed. Accordingly, the positive electrode slurry composition can have a low viscosity and also have a high solid content compared to other positive electrode slurry compositions having the same viscosity.

In addition, since the particle agglomeration of lithium iron phosphate can be suppressed, the stability and coating processability of the positive electrode slurry composition can be improved.

Additionally, since the positive electrode slurry composition according to the present invention has a relatively high solid content, the time required for a slurry drying process in manufacture of a positive electrode is shortened, and thus process costs can be reduced.

In addition, since the dispersant has a low weight-average molecular weight, a conductive material is agglomerated in the form of a sphere in a positive electrode, and thus the surface area of the agglomerated conductive material can be minimized compared to a conductive material agglomerated in the form of a line. As a result, the surface area of a positive electrode active material, which is located adjacent to the agglomerated conductive material and thus does not participate in a lithium intercalation/deintercalation reaction, is minimized, and thus the discharge resistance of a lithium secondary battery manufactured using the positive electrode slurry composition can be lowered.

### [Brief Description of the Drawings]

FIG. 1 is a scanning electron microscope (SEM) image of the cross section of a positive electrode in a lithium secondary battery of Example 1.
FIG. 2 is an SEM image of the cross section of a positive electrode in a lithium secondary battery of Example 2.
FIG. 3 is an SEM image of the cross section of a positive electrode in a lithium secondary battery of Example 3.
FIG. 4 is an SEM image of the cross section of a positive electrode in a lithium secondary battery of Comparative Example 1.

### [Detailed Description]

Advantages and features of the present invention and methods for achieving the same will be apparent by the exemplary embodiments described below in detail with reference to the accompanying drawings. However, the present invention is not limited to the exemplary embodiments described below and may be implemented in various different forms. Rather, the exemplary embodiments have been provided to make the disclosure of the present invention thorough and complete and to fully inform the scope of the present invention to those of ordinary skill in the art to which the present invention pertains, and the present invention is defined only by the scope of the claims. Throughout the specification, like reference numerals denote like elements.

All terms used herein, including technical or scientific terms, should be interpreted as having the same meaning as commonly understood by one of ordinary skill in the art to which the present invention pertains unless otherwise defined. Therefore, terms such as those defined in the commonly used dictionaries are not to be interpreted in an ideal or overly formal sense unless explicitly defined.

Terms used herein are for describing the exemplary embodiments and are not intended to limit the present invention. In this specification, the singular form may include the plural form unless specifically stated in the phrase. As used herein, the terms/term "comprises" and/or "comprising" do/does not preclude the presence or addition of one or more other components in addition to the stated components.

In this specification, when a component is referred to as "containing", "including", "comprising", or "having" another component, it is to be understood that the component does not exclude other components but may include other components as well, unless specifically stated otherwise.

In this specification, reference to "A and/or B" refers to A, B, or A and B.

In this specification, "%" refers to wt% unless clearly described otherwise.

In this specification, D₅₀ refers to a particle diameter corresponding to a cumulative volume of 50% in the particle diameter distribution curve. The D₅₀ may be measured, for example, by a laser diffraction method. The laser diffraction method generally enables measurement of a particle diameter ranging from submicrons to several mm and may obtain a result with high reproducibility and high resolution.

In this specification, a "specific surface area" is measured by a BET method and may be specifically calculated from the amount of nitrogen gas adsorbed at a liquid nitrogen temperature (77 K) using BELSORP-mini II commercially available from BEL Japan.

In this specification, the viscosity of a positive electrode slurry composition is measured at 25 °C and a shear rate of 10⁻² rpm using a viscometer (Brookfield) after the positive electrode slurry composition is cooled at room temperature and a relative humidity of 1% for an hour. The viscosity measurement is performed within 2 hours including a cooling time after preparing the positive electrode slurry composition.

In this specification, SOC50 discharge resistance refers to a value obtained by dividing a voltage drop value exhibited when a discharge pulse is applied at a state of charge (SOC) of 50% and 2.5C for 10 seconds by a current value.

Hereinafter, embodiments of the present invention will be described in detail.

### Positive electrode slurry composition

A positive electrode slurry composition according to an embodiment of the present invention is intended to form a positive electrode active material layer and includes a positive electrode active material, a dispersant, a conductive material, a binder, and a solvent, wherein the positive electrode active material includes lithium iron phosphate, and the dispersant has a weight-average molecular weight of 10,000 g/mol to 150,000 g/mol.

In the case of a conventional positive electrode slurry composition including lithium iron phosphate, particle agglomeration of lithium iron phosphate excessively occurs due to a small particle size of lithium iron phosphate and a carbon coating layer formed on the surface of lithium iron phosphate, and thus the stability and coating processability of a positive electrode slurry are degraded. Also, when an excessive amount of a conductive material is used to improve the electrical conductivity of a positive electrode, agglomeration between conductive material particles excessively occurs, and thus the conductive network of a positive electrode is degraded. As a result, the charge/discharge resistance of a lithium secondary battery is increased.

As a result of prolonged research to solve the above problems, the inventors of the present disclosure have found that, when a dispersant having a low weight-average molecular weight is included in a positive electrode slurry composition, the dispersibility of a positive electrode active material and/or a conductive material in a positive electrode slurry composition can be improved, and particle agglomeration can be suppressed. This will be described in detail below.

### (1) Positive electrode active material

The positive electrode active material may include lithium iron phosphate. When the positive electrode active material includes the lithium iron phosphate, the stability of a positive electrode including the positive electrode active material is substantially improved, and thus ignition of a lithium secondary battery including the positive electrode can be substantially reduced.

The lithium iron phosphate may be a compound represented by the following Chemical Formula 1.

[Chemical Formula 1] Li₁₊ₐFe₁₋ₓMₓ(PO_{4-b})X_{b}

(in Chemical Formula 1, M includes any one or two or more elements selected from the group consisting of Al, Mg, Ni, Co, Mn, Ti, Ga, Cu, V, Nb, Zr, Ce, In, Zn, and Y, X includes any one or two or more elements selected from the group consisting of F, S, and N, and a, b, and x satisfy -0.5≤a≤0.5, 0≤b≤0.1, and 0≤x≤0.5, respectively)

For example, the lithium iron phosphate may be LiFePO₄.

The lithium iron phosphate may include a carbon coating layer on the surface thereof. When the carbon coating layer is formed on the surface of lithium iron phosphate, electrical conductivity is enhanced, and thus the resistance characteristics of a positive electrode can be improved.

The carbon coating layer may be formed using at least one raw material selected from the group consisting of glucose, sucrose, lactose, starch, an oligosaccharide, a polyoligosaccharide, fructose, cellulose, a furfuryl alcohol polymer, a block copolymer of ethylene and ethylene oxide, a vinyl-based resin, a cellulose-based resin, a phenolic resin, a pitch-based resin, and a tar-based resin. Specifically, the carbon coating layer may be formed by mixing the raw materials with the lithium iron phosphate and thermally treating the resulting mixture.

The lithium iron phosphate may have an average particle diameter D₅₀ of 0.8 µm to 20.0 µm, specifically 0.9 µm to 10.0 µm, and more specifically 0.9 µm to 3.0 µm. When the average particle diameter D₅₀ of the positive electrode active material satisfies the above-described range, lithium mobility is improved in lithium iron phosphate, and thus the charging/discharging characteristics of a battery can be improved.

The lithium iron phosphate may have a BET specific surface area of 5 m²/g to 20 m²/g, specifically 7 m²/g to 18 m²/g, and more specifically 9 m²/g to 16 m²/g. The above-described range is a low BET specific surface area range compared to typical lithium iron phosphate. When the above-described range is satisfied, agglomeration of the lithium iron phosphate can be effectively suppressed even in a positive electrode slurry composition having a relatively small amount of a dispersant.

The lithium iron phosphate may be included in an amount of 93 wt% to 98 wt%, specifically 93.5 wt% to 98 wt%, and more specifically 94 wt% to 97 wt% based on the total solid content of the positive electrode slurry composition. When the content of the lithium iron phosphate satisfies the above-described range, sufficient energy density of a positive electrode is ensured, and thus the battery capacity of a positive electrode can be enhanced.

### (2) Dispersant

The dispersant suppresses the lithium iron phosphate from being excessively agglomerated in the positive electrode slurry composition and allows the lithium iron phosphate to be effectively dispersed in the prepared positive electrode active material layer.

The dispersant may include a hydrogenated nitrile-based copolymer. Specifically, the dispersant may be a hydrogenated nitrile-based copolymer.

Specifically, the hydrogenated nitrile-based copolymer may be a copolymer including a structural unit derived from an α,β-unsaturated nitrile and a structural unit derived from a hydrogenated conjugated diene or a copolymer including a structural unit derived from an α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile, and the like may be used, which may be used alone or in combination of two or more thereof. As the conjugated diene-based monomer, for example, a C4 to C6 conjugated diene-based monomer such as 1,3-butadiene, isoprene, 2,3-methyl butadiene, and the like may be used, which may be used alone or in combination of two or more thereof.

More specifically, the hydrogenated nitrile-based copolymer may be a hydrogenated nitrile-based butadiene rubber (H-NBR).

The dispersant may have a weight-average molecular weight of 10,000 g/mol to 150,000 g/mol, preferably 15,000 g/mol to 140,000 g/mol, and more preferably 20,000 g/mol to 130,000 g/mol. This value is lower than the weight-average molecular weight of a dispersant included in a conventional positive electrode slurry composition.

When the weight-average molecular weight of the dispersant is less than 10,000 g/mol, the dispersibility of lithium iron phosphate is degraded, and the dispersant may be eluted in manufacture of an electrode. When the weight-average molecular weight of the dispersant exceeds 150,000 g/mol, a positive electrode slurry composition has a high viscosity, and thus the stability and coating processability of the positive electrode slurry composition may be degraded, and a conductive material may be agglomerated in the form of a line. Therefore, it is not preferred in terms of resistance of a lithium secondary battery.

On the other hand, when the weight-average molecular weight of the dispersant satisfies the above-described range, the solvent wetting and dispersibility of lithium iron phosphate particles are improved, and thus particle agglomeration of lithium iron phosphate can be suppressed. Accordingly, the positive electrode slurry composition can have a low viscosity and also have a high solid content compared to other positive electrode slurry compositions having the same viscosity.

In addition, when the weight-average molecular weight of the dispersant satisfies the above-described range, a conductive material is agglomerated in the form of a sphere in a positive electrode, and thus the surface area of the agglomerated conductive material can be minimized compared to a conductive material agglomerated in the form of a line. As a result, the surface area of a positive electrode active material, which is located adjacent to the agglomerated conductive material and thus does not participate in a lithium intercalation/deintercalation reaction, is minimized, and thus the discharge resistance of a lithium secondary battery manufactured using the positive electrode slurry composition can be lowered.

The dispersant may be included in an amount of 0.2 wt% to 1.0 wt%, specifically 0.2 wt% to 0.9 wt%, and more specifically 0.3 wt% to 0.8 wt% based on the total solid content of the positive electrode slurry composition. When the content of the dispersant satisfies the above-described range, agglomeration of a conductive material in a positive electrode active material layer is suppressed, and thus the conductive network of a positive electrode can be improved.

### (3) Binder

The binder serves to aid in the binding of the positive electrode active material, the conductive material, and the like to one another and to a current collector. Specific examples thereof include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene butadiene rubber, fluoro-rubber, various copolymers thereof, and the like, which may be used alone or in combination of two or more thereof.

The binder may be included in an amount of 2.0 wt% to 4.0 wt%, specifically 2.2 wt% to 3.8 wt%, and more specifically 2.3 wt% to 3.7 wt% based on the total solid content of the positive electrode slurry composition. When the content of the binder satisfies the above-described range, a contact area between the binder and the lithium iron phosphate is increased, and thus excellent positive electrode adhesion can be ensured.

### (4) Conductive material

The conductive material is not particularly limited as long as it does not cause a chemical change in a battery and has conductivity. For example, graphite; carbon-based materials such as carbon black, acetylene black, Ketjen black, channel black, furnace black, lamp black, thermal black, and the like; conductive fibers such as carbon fibers, metal fibers, and the like; fluorinated carbon; metal powders such as aluminum, nickel powders, and the like; conductive whiskers such as zinc oxide, potassium titanate, and the like; conductive metal oxides such as titanium oxide and the like; and conductive materials such as polyphenylene derivatives and the like may be used. Specific examples of a commercially available conductive material include acetylene black-based products (Chevron Chemical Company), Denka black (Denka Singapore Private Limited), Gulf Oil Company products, Ketjen black, EC-based products (Armak Company), Vulcan XC-72 (Cabot Company), Super P (Timcal), and the like. Preferably, the conductive material may be carbon nanotubes. Since the conductive network of carbon nanotubes may mitigate a migration phenomenon of the binder in a drying process of the positive electrode slurry composition, carbon nanotubes are particularly preferred as the conductive material included in the positive electrode slurry composition of the present disclosure.

The conductive material may be included in an amount of 0.1 wt% to 3.0 wt%, specifically 0.2 wt% to 2.0 wt%, and more specifically 0.6 wt% to 1.2 wt% based on the total solid content of the positive electrode slurry composition. When the content of the conductive material satisfies the above-described range, the conductive network of a positive electrode is ensured, and thus the electrical conductivity of a positive electrode can be improved.

### (5) Solvent

The solvent is intended to mix the above-described positive electrode active material, binder, dispersant, and/or conductive material. As the solvent, any solvent that is typically used in the art may be used, and examples thereof include dimethyl sulfoxide (DMSO), isopropyl alcohol, N-methyl-2-pyrrolidone (NMP), acetone, water, and the like, which may be used alone or in combination of two or more thereof.

The solvent may be included in an amount such that the positive electrode slurry composition has an appropriate viscosity and an appropriate solid content. For example, the solvent may be included in an amount such that a solid content in the composition is 40 wt% to 75 wt%, specifically 50 wt% to 70 wt%, and more specifically 55 wt% to 70 wt%. This content is relatively higher than the content of other conventional positive electrode slurry compositions. When the solid content of the positive electrode slurry composition satisfies the above-described range, the time required for a slurry drying process in manufacture of a positive electrode is shortened, and thus process costs can be reduced. Also, the composition has a coatable level of viscosity, and a positive electrode active material layer formed of the composition has a certain level or more of thickness, and thus excellent energy density can be ensured.

The positive electrode slurry composition according to an embodiment of the present invention may have a viscosity of 5,000 cps to 20,000 cps, specifically 6,000 cps to 15,000 cps, and more specifically 8,000 cps to 15,000 cps as measured at 25 °C and a shear rate of 10⁻² rpm. The positive electrode slurry composition having a viscosity within the above-described range can have excellent storage stability and coating processability. Also, the positive electrode slurry composition can have a high solid content compared to other positive electrode slurry compositions having the same viscosity, and thus the time required for a slurry drying process in manufacture of a positive electrode is shortened, and thus process costs can be reduced.

### Positive electrode

Next, a positive electrode according to the present disclosure will be described.

The positive electrode includes a positive electrode current collector and a positive electrode active material layer positioned on at least one surface of the positive electrode current collector. In this case, the positive electrode active material layer includes a positive electrode active material, a conductive material, a binder, and a dispersant, wherein the positive electrode active material includes lithium iron phosphate, and the dispersant has a weight-average molecular weight of 10,000 g/mol to 150,000 g/mol. The positive electrode may be formed using the above-described positive electrode slurry composition. The positive electrode active material, binder, dispersant, and conductive material have been described above.

Since the positive electrode according to the present disclosure includes a hydrogenated nitrile-based butadiene rubber as the dispersant, and the dispersant has a weight-average molecular weight of 10,000 g/mol to 150,000 g/mol, the conductive material is agglomerated in the form of a sphere in the positive electrode. In the case of the positive electrode, the surface area of the agglomerated conductive material may be minimized as compared to a conductive material agglomerated in the form of a line. As a result, the surface area of a positive electrode active material, which is located adjacent to the agglomerated conductive material and thus does not participate in a lithium intercalation/deintercalation reaction, is minimized, and thus the discharge resistance of a lithium secondary battery may be lowered.

In the case of the positive electrode according to the present disclosure, the conductive material is agglomerated in the form of a sphere, and as a result, the agglomeration region of the conductive material in the cross section of the positive electrode has a maximum major axis length of 10 µm or less. Also, a ratio of the length of the minor axis of the agglomeration region of the conductive material to the length of the major axis may be 0.1 to 1, preferably 0.2 to 1, and more preferably 0.3 to 1.

When the agglomeration region of the conductive material satisfies the above-described range, the discharge resistance of a lithium secondary battery can be enhanced.

The agglomeration region of the conductive material in the cross section of the positive electrode can be confirmed by observing the cross section of the positive electrode using a scanning electron microscope (hereinafter, referred to as an "SEM"). In the SEM image or back scattered electron (BSE) image obtained by photographing the cross section of the positive electrode, lithium iron phosphate is shown in bright contrast, and the agglomeration region of the conductive material is shown in dark contrast. It is possible to measure the lengths of the major axis and minor axis of the agglomeration region of the conductive material, which are shown in dark contrast.

In the present disclosure, a region with an area of 50 µm × 50 µm in the cross section of the positive electrode is observed using an SEM, and the lengths of the major axis and minor axis of the region shown as a dark shadow in the SEM image or BSE image are measured.

The positive electrode current collector is not particularly limited as long as it does not cause a chemical change in a battery and has conductivity. For example, copper, stainless steel, aluminum, nickel, titanium, calcined carbon, or aluminum or stainless steel whose surface has been treated with carbon, nickel, titanium, silver, or the like may be used as the current collector.

The positive electrode current collector may have a thickness of 3 µm to 500 µm and may have fine irregularities formed on the surface thereof to increase the adhesion to a positive electrode active material layer. For example, the positive electrode current collector may be used in any of various forms such as a film, a sheet, a foil, a net, a porous material, a foam, a non-woven fabric, and the like.

The positive electrode active material layer may be positioned on at least one surface of the positive electrode current collector and formed of the above-described positive electrode slurry composition.

The positive electrode may be manufactured by a typical method of manufacturing a positive electrode, except that the above-described positive electrode slurry composition is used. Specifically, the positive electrode may be manufactured by applying the positive electrode slurry composition onto a positive electrode current collector, followed by drying and rolling.

As another method, the positive electrode may be manufactured by laminating, on a positive electrode current collector, a film obtained by casting the positive electrode slurry composition on a separate support and removing it from the support.

### Lithium secondary battery

Next, a lithium secondary battery according to the present disclosure will be described.

The lithium secondary battery includes a positive electrode, a negative electrode, a separator interposed between the positive electrode and the negative electrode, and an electrolyte.

The positive electrode in the lithium secondary battery has been described above. For example, the positive electrode includes a positive electrode active material, a conductive material, a binder, and a dispersant, wherein the positive electrode active material includes lithium iron phosphate, and the dispersant has a weight-average molecular weight of 10,000 g/mol to 150,000 g/mol.

The negative electrode may be manufactured, for example, by preparing a composition for forming a negative electrode, which includes a negative electrode active material, a negative electrode binder, and a negative electrode conductive material, and then applying the composition onto a negative electrode current collector.

The negative electrode active material is not particularly limited, and any compound capable of reversibly intercalating and deintercalating lithium may be used. Specific examples thereof include: carbonaceous materials such as artificial graphite, natural graphite, graphitized carbon fiber, amorphous carbon, high-crystallinity carbon, and the like; (semi)metal-based materials capable of alloying with lithium, such as Si, Al, Sn, Pb, Zn, Bi, In, Mg, Ga, Cd, a Si alloy, a Sn alloy, an Al alloy, and the like; and composites including (semi)metal-based materials and carbonaceous materials. Examples of low-crystallinity carbon include soft carbon and hard carbon, and examples of the high-crystallinity carbon include natural graphite, Kish graphite, pyrolytic carbon, mesophase pitch-based carbon fiber, meso-carbon microbeads, mesophase pitches, and high-temperature calcined carbon such as petroleum or coal tar pitch-derived cokes, which may be used alone or in combination of two or more thereof. Also, as the negative electrode active material, a lithium metal thin film may be used.

The negative electrode conductive material is used to impart conductivity to the electrode, and any conductive material that does not cause a chemical change in a battery and has conductivity may be used without particular limitation. Specific examples thereof include graphite such as natural graphite, artificial graphite, and the like; carbon-based materials such as carbon black, acetylene black, Ketjen black, channel black, furnace black, lamp black, thermal black, carbon fiber, carbon nanotubes, and the like; powders or fibers of metals such as copper, nickel, aluminum, silver, and the like; conductive whiskers such as zinc oxide, potassium titanate, and the like; conductive metal oxides such as titanium oxide and the like; and conductive polymers such as polyphenylene derivatives and the like, which may be used alone or in combination of two or more thereof. The negative electrode conductive material may be typically included in an amount of 1 to 30 wt%, preferably 1 to 20 wt%, and more preferably 1 to 10 wt% with respect to the total weight of a negative electrode active material layer.

The negative electrode binder serves to enhance the cohesion between negative electrode active material particles and the adhesion between the negative electrode active material and the negative electrode current collector. Specific examples thereof include polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluoro-rubber, and various copolymers thereof, which may be used alone or in combination of two or more thereof. The negative electrode binder may be included in an amount of 1 to 30 wt%, preferably 1 to 20 wt%, and more preferably 1 to 10 wt% with respect to the total weight of a negative electrode active material layer.

Meanwhile, the negative electrode current collector is not particularly limited as long as it does not cause a chemical change in a battery and has high conductivity. For example, copper, stainless steel, aluminum, nickel, titanium, calcined carbon, or copper or stainless steel whose surface has been treated with carbon, nickel, titanium, silver, or the like, an aluminum-cadmium alloy, or the like may be used as the negative electrode current collector.

In addition, the negative electrode current collector may typically have a thickness of 3 µm to 500 µm. Like the positive electrode current collector, the negative electrode current collector may have fine irregularities formed on the surface thereof to increase the adhesion of a negative electrode active material. For example, the negative electrode current collector may be used in any of various forms such as a film, a sheet, a foil, a net, a porous material, a foam, a non-woven fabric, and the like.

Meanwhile, as the separator in the lithium secondary battery, any separator that is typically used as a separator in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film made of a polyolefin-based polymer such as an ethylene homopolymer, a propylene homopolymer, an ethylene/butene copolymer, an ethylene/hexene copolymer, an ethylene/methacrylate copolymer, or the like or a stacked structure having two or more layers thereof, may be used. Also, a typical porous non-woven fabric, for example, a non-woven fabric made of high-melting-point glass fiber, polyethylene terephthalate fiber, or the like may be used. In addition, the separator may be a porous thin film having a pore diameter of 0.01 µm to 10 µm and a thickness of 5 µm to 300 µm.

Meanwhile, in the lithium secondary battery, the electrolyte may include an organic solvent and a lithium salt, which are typically used in an electrolyte, and they are not particularly limited.

As the organic solvent, any solvent that may function as a medium through which ions involved in an electrochemical reaction of a battery can migrate may be used without particular limitation. Specifically, as the organic solvent, an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; or a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like may be used.

Among those listed above, the carbonate-based solvent is preferred, and a mixture of a cyclic carbonate-based compound with high ion conductivity and high permittivity (e.g., EC, PC, etc.) and a linear carbonate-based compound with low viscosity (e.g., EMC, DMC, DEC, etc.), which may increase the charging/discharging performance of a battery, is more preferred.

As the lithium salt, any compound that is able to provide lithium ions used in a lithium secondary battery may be used without particular limitation. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt is preferably included at a concentration of about 0.6 mol% to 2 mol% in the electrolyte.

In addition to the above-described electrolyte components, the electrolyte may further include one or more additives such as pyridine, triethylphosphite, triethanolamine, cyclic ether, ethylenediamine, n-glyme, hexamethyl phosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, and the like for the purpose of enhancing the lifetime characteristics of a battery, suppressing a decrease in battery capacity, enhancing the discharge capacity of a battery, or the like. In this case, the additives may be included in an amount of 0.1 to 5 wt% with respect to the total weight of the electrolyte.

The lithium secondary battery according to the present disclosure may be manufactured by interposing a separator between the positive electrode and the negative electrode to form an electrode assembly, placing the electrode assembly in a cylindrical battery case or a prismatic battery case, and injecting an electrolyte. Alternatively, the lithium secondary battery may be manufactured by stacking the electrode assembly, impregnating the same with an electrolyte, placing the resultant in a battery case, and sealing the battery case.

In the manufacture of the lithium secondary battery according to the present disclosure, the electrode assembly may be dried to remove one or more organic solvents selected from the group consisting of N-methyl-2-pyrrolidone (NMP), acetone, ethanol, PC, EMC, EC, and DMC, which are used in the manufacture of the positive electrode. When an electrolyte having the same components as the organic solvent used in the manufacture of the positive electrode is used, the process of drying the electrode assembly may be omitted.

Unlike the above-described lithium secondary battery, a lithium secondary battery according to another embodiment of the present invention may be a solid-state battery.

As the battery case, any battery case that is typically used in the art may be used, and there is no limitation on an outer shape according to the purpose of the battery. For example, the outer shape of the battery case may be a cylindrical form using a can, a prismatic form, a pouch form, a coin form, or the like.

The lithium secondary battery according to the present disclosure is useful in the fields of portable devices such as mobile phones, laptop computers, digital cameras, and the like, energy storage systems (ESSs), and electric vehicles such as hybrid electric vehicles (HEVs) and the like due to stably exhibiting excellent discharge capacity, output characteristics, and a capacity retention rate.

The lithium secondary battery according to the present disclosure may have a cell resistance (SOC50 discharge resistance) of 1.7 mΩ or less, specifically 1.1 mS2 to 1.7 mQ, and more specifically 1.1 mS2 to 1.6 mQ, which is a value obtained by dividing a voltage drop value exhibited when a discharge pulse is applied at a state of charge (SOC) of 50% and 2.5C for 10 seconds by a current value.

The cell resistance satisfying the above-described range may be exhibited because the positive electrode active material in the lithium secondary battery includes lithium iron phosphate and the dispersant has a weight-average molecular weight of 10,000 g/mol to 150,000 g/mol. Specifically, when a low-molecular-weight dispersant is included in the positive electrode slurry composition, a conductive material is agglomerated in the form of a sphere in a positive electrode, and thus the surface area of the agglomerated conductive material can be minimized compared to a conductive material agglomerated in the form of a line. As a result, the surface area of a positive electrode active material, which is located adjacent to the agglomerated conductive material and thus does not participate in a lithium intercalation/deintercalation reaction, is minimized, and thus the cell resistance of a lithium secondary battery manufactured using the positive electrode slurry composition can be lowered to the above-described range.

Hereinafter, the present invention will be described in further detail with reference to examples. However, the following examples are merely presented to exemplify the present invention, and the scope of the present invention is not limited to the following examples.

### Example 1

### (1) Preparation of positive electrode slurry composition

LiFePO₄ having an average particle diameter D₅₀ of 1 µm and a BET specific surface area of 11 m²/g as a positive electrode active material, carbon nanotubes (CNTs) as a conductive material, polyvinylidene fluoride (PVdF) as a binder, and a hydrogenated nitrile-based butadiene rubber (H-NBR) having a weight-average molecular weight (Mw) of 40,000 g/mol as a dispersant were added to an N-methyl pyrrolidone (NMP) solvent and then mixed at 2500 rpm for 60 minutes using a homo-mixer (homo-disper) to prepare a positive electrode slurry composition.

The positive electrode active material, conductive material, binder, and dispersant in the positive electrode slurry composition were present in a weight ratio of 95.68:0.8:3.0:0.52, and a solid content of the positive electrode slurry composition was 60 wt%.

### (2) Manufacture of positive electrode

The prepared positive electrode slurry composition was applied onto a 15 µm-thick aluminum thin film using a slot die coater and then vacuum-dried at 130 °C for 10 hours. Afterward, rolling was performed so that a positive electrode active material layer had a porosity of 28% to manufacture a positive electrode. The positive electrode active material layer had a thickness of 98 µm, a width of 33 mm, and a length of 50 mm, and the loading amount of the positive electrode active material layer was 3.6 mAh/cm².

### (3) Manufacture of lithium secondary battery

First, artificial graphite as a negative electrode active material, Super C as a conductive material, and SBR/CMC as a binder were mixed in a weight ratio of 96:1:3 to prepare a negative electrode slurry, and the slurry was applied onto one surface of a copper current collector, dried at 130 °C, and rolled so that a negative electrode active material layer had a porosity of 29% to manufacture a negative electrode having a width of 34 mm and a length of 51 mm.

Next, an 18 µm-thick polypropylene separator was interposed between the manufactured positive electrode and negative electrode to manufacture an electrode assembly. The electrode assembly was accommodated in an aluminum pouch-type battery case, 230g of an electrolyte in which 1.0 M LiPF₆ and 2 wt% vinylene carbonate (VC) were dissolved in an organic solvent (EC/EMC/DMC=3:3:4 volume ratio) was injected, and the battery case was vacuum-sealed. The electrolyte was aged for a day, activated at 7.9 mAh for 3 hours, and then further aged for 3 days. Finally, a degassing process was performed to manufacture a lithium secondary battery.

### Example 2 to Example 3

Positive electrode slurry compositions and lithium secondary batteries were manufactured in the same manner as in Example 1, except that an H-NBR having a weight-average molecular weight (Mw) described in Table 1 was used as a dispersant.

### Comparative Example 1

A positive electrode slurry composition and a lithium secondary battery were manufactured in the same manner as in Example 1, except that an H-NBR having a weight-average molecular weight (Mw) of 220,000 g/mol was used as a dispersant, and a solid content in a positive electrode slurry composition was 58 wt%.

### Comparative Example 2

A positive electrode slurry composition and a lithium secondary battery were manufactured in the same manner as in Comparative Example 1, except that a solid content in a positive electrode slurry composition was 60 wt%.

**[Table 1]**

| | Solid content in positive electrode slurry composition (wt%) | Weight-average molecular weight of dispersant (H-NBR) (g/mol) |
|---|---|---|
| Example 1 | 60 | 40,000 |
| Example 2 | 60 | 21,000 |
| Example 3 | 60 | 130,000 |
| Comparative Example 1 | 57 | 220,000 |
| Comparative Example 2 | 60 | 220,000 |

### Experimental Example 1 - Measurement of viscosity

The viscosity of each positive electrode slurry composition prepared in Example 1 to Example 3 and Comparative Examples 1 and 2 was measured, and measurement results are shown in Table 2 below.

Specifically, each positive electrode slurry composition prepared in Example 1 to Example 3 and Comparative Examples 1 and 2 was cooled at room temperature and a relative humidity of 1% for an hour, and then the viscosity of the positive electrode slurry composition was measured at 25 °C and a shear rate of 10⁻² rpm using a viscometer (Brookfield). The viscosity measurement was performed within 2 hours including a cooling time after preparing the positive electrode slurry composition.

### Experimental Example 2 - Confirmation of agglomeration form of conductive material on cross section of positive electrode

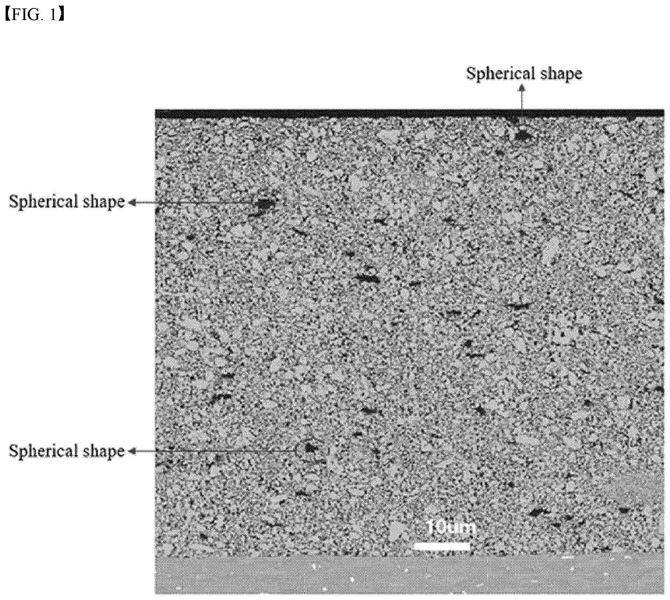

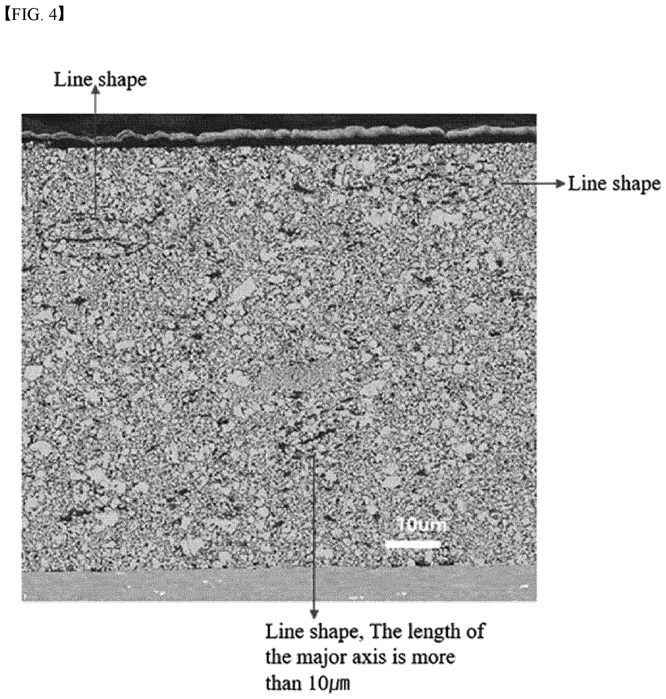

A region with an area of 50 µm × 50 µm in the cross section of each positive electrode manufactured in Example 1 to Example 3 and Comparative Example 1 was observed using a scanning electron microscope (SEM), and the agglomeration form of the conductive material on the cross section of the positive electrode was confirmed. The SEM images are shown in FIG. 1 and FIG. 4, and the agglomeration form of the conductive material on the cross section of the positive electrode is shown in Table 2 below.

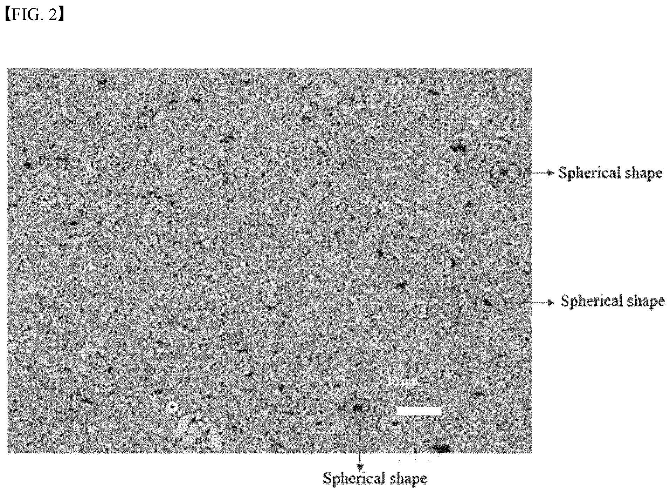

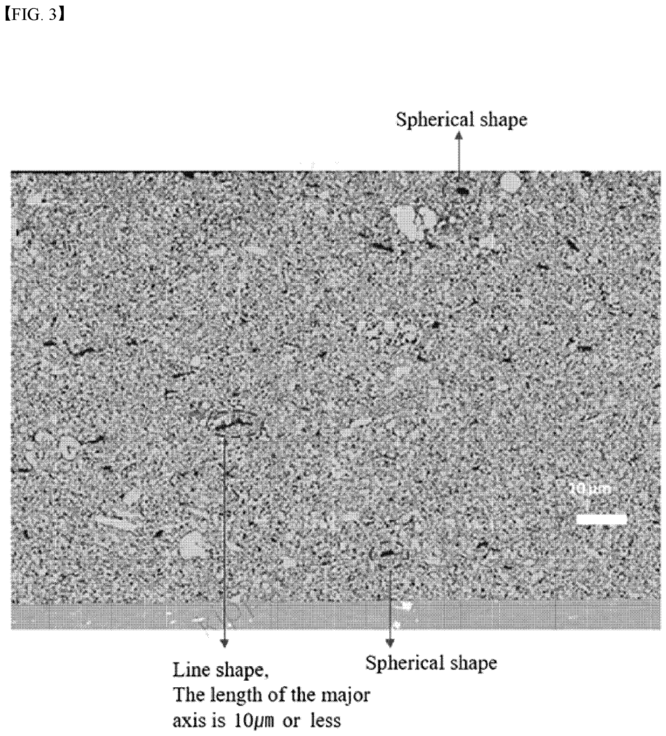

FIG. 1 is an SEM image of the cross section of the positive electrode in the lithium secondary battery of Example 1, FIG. 2 is an SEM image of the cross section of the positive electrode in the lithium secondary battery of Example 2, FIG. 3 is an SEM image of the cross section of the positive electrode in the lithium secondary battery of Example 3, and FIG. 4 is an SEM image of the cross section of the positive electrode in the lithium secondary battery of Comparative Example 1.

In FIG. 1 to FIG. 4, lithium iron phosphate is shown in a bright part, and the agglomeration region of the conductive material is shown as a dark shadow.

As shown in FIG. 1 to FIG. 2, in the cross section of the positive electrodes of Examples 1 and 2, it can be confirmed that a region in which the conductive material was agglomerated in the form of a line was not found, and the conductive material was agglomerated in the form of a sphere. As shown in FIG. 3, in the case of the cross section of the positive electrode of Example 3, both a region in which the conductive material was agglomerated in the form of a sphere and a region in which the conductive material was agglomerated in the form of a line were present, but the region in which the conductive material was agglomerated in the form of a line had a maximum major axis length of 10 µm or less. Meanwhile, as shown in FIG. 4, in the cross section of the positive electrode of Comparative Example 1, linear conductive material agglomeration regions having a length of 1 µm or more were found, and three conductive material agglomeration regions having a major axis length of more than 10 µm were also found.

### Experimental Example 3 - Measurement of cell resistance of lithium secondary battery

The cell resistance of each lithium secondary battery manufactured in Example 1 to Example 3 and Comparative Examples 1 and 2 was measured, and measurement results are shown in Table 2 below.

Specifically, for each lithium secondary battery manufactured in Example 1 to Example 3 and Comparative Examples 1 and 2, a value obtained by dividing a voltage drop value exhibited when a discharge pulse was applied at a state of charge (SOC) of 50% and 2.5C for 10 seconds by a current value was measured as cell resistance (SOC50 discharge resistance).

**[Table 2]**

| | Positive electrode slurry composition | Cross section of positive electrode | Lithium secondary battery |
|---|---|---|---|
| | Viscosity (cps) | Agglomeration form of conductive material | Cell resistance (mΩ) |
| Example 1 | 11,900 | Sphere | 1.5 |
| Example 2 | 10,500 | Sphere | 1.5 |
| Example 3 | 12,400 | Sphere/ Linear | 1.5 |
| Comparative Example 1 | 8,900 | Linear | 1.8 |
| Comparative Example 2 | 23,000 | (not observed) | (not determined) |

Referring to Table 2, it can be confirmed that the positive electrode slurry composition of Comparative Example 2, in which the weight-average molecular weight of a dispersant exceeded 150,000 g/mol, had a substantially higher viscosity than the positive electrode slurry composition of Example 1 based on the same solid content.

In the case of Comparative Example 2, since the viscosity of the positive electrode slurry composition was so high that a transfer pipe connected to a slot die coater was clogged with the positive electrode slurry composition, it was not possible to discharge the slurry composition from the slot die coater by typical pump pressure. In order to discharge the positive electrode slurry composition from the slot die coater, high pump pressure needs to be applied to the slot die coater, and therefore, excessive pump pressure was applied. As a result, since the positive electrode slurry composition could not be applied in the same loading amount as in Example 1, the manufacture of a positive electrode was not possible, and thus the measurement of the cell resistance of a lithium secondary battery was also not possible.

Although the positive electrode slurry composition of Comparative Example 1, in which the weight-average molecular weight of a dispersant exceeded 150,000 g/mol, had a low viscosity, it had a lower solid content than the positive electrode slurry composition of Example 1, so a long time was required to dry the composition in the manufacture of the positive electrode, and thus process costs were increased.

In addition, it can be confirmed that the lithium secondary battery of Comparative Example 1 exhibited higher cell resistance than the lithium secondary battery of Example 1. It is speculated that such a result was obtained because, in the case of Comparative Example 1, as shown in FIG. 2, the conductive material is agglomerated in the form of a line in the positive electrode to increase the surface area of the agglomerated conductive material, and thus the surface area of a positive electrode active material, which is located adjacent to the agglomerated conductive material and thus does not participate in a lithium intercalation/deintercalation reaction, is increased.

## Claims

1. A positive electrode slurry composition comprising:
a positive electrode active material, a dispersant, a conductive material, a binder, and a solvent,
wherein the positive electrode active material includes lithium iron phosphate, and
the dispersant has a weight-average molecular weight of 10,000 g/mol to 150,000 g/mol.

2. The positive electrode slurry composition of claim 1, wherein the lithium iron phosphate is a compound represented by the following Chemical Formula 1.
[Chemical Formula 1] Li₁₊ₐFe₁₋ₓMₓ(PO_{4-b})X_{b}
wherein, in Chemical Formula 1, M is any one or two or more elements selected from the group consisting of Al, Mg, Ni, Co, Mn, Ti, Ga, Cu, V, Nb, Zr, Ce, In, Zn, and Y, X is any one or two or more elements selected from the group consisting of F, S, and N, and a, b, and x satisfy -0.5≤a≤0.5, 0≤b≤0.1, and 0≤x≤0.5, respectively.

3. The positive electrode slurry composition of claim 1, wherein the dispersant is a hydrogenated nitrile-based butadiene rubber.

4. The positive electrode slurry composition of claim 1, wherein the dispersant is included in an amount of 0.2 parts by weight to 1.0 parts by weight with respect to 100 parts by weight of solids in the positive electrode slurry composition.

5. The positive electrode slurry composition of claim 1, wherein a solid content in the positive electrode slurry composition is from 40 wt% to 75 wt%.

6. The positive electrode slurry composition of claim 1, wherein the positive electrode slurry composition has a viscosity of 5,000 cps to 20,000 cps as measured under conditions of 25 °C and 10⁻² rpm.

7. The positive electrode slurry composition of claim 1, wherein the conductive material is included in an amount of 0.1 parts by weight to 3.0 parts by weight with respect to 100 parts by weight of solids in the positive electrode slurry composition.

8. The positive electrode slurry composition of claim 1, wherein the binder is included in an amount of 2.0 parts by weight to 4.0 parts by weight with respect to 100 parts by weight of solids in the positive electrode slurry composition.

9. A lithium secondary battery comprising a positive electrode,
wherein the positive electrode includes a positive electrode active material, a dispersant, a conductive material, and a binder,
wherein the positive electrode active material includes lithium iron phosphate, and
wherein an agglomeration region of the conductive material in a cross section of the positive electrode has a maximum major axis length of 10 µm or less.

10. The lithium secondary battery of claim 9, wherein the dispersant has a weight-average molecular weight of 10,000 g/mol to 150,000 g/mol.

11. The lithium secondary battery of claim 9, wherein the dispersant is a hydrogenated nitrile-based butadiene rubber.

12. The lithium secondary battery of claim 9, wherein the lithium secondary battery has an SOC50 discharge resistance of 1.7 mΩ or less.
